Europäisches Patentamt

European Patent Office

Office européen des brevets

(19)

(11) Numéro de publication : **0 314 550 B1**

(12)

# FASCICULE DE BREVET EUROPEEN

(45) Date de publication du fascicule du brevet :
**12.06.91 Bulletin 91/24**

(51) Int. Cl.⁵ : **B01J 8/04**, // C01C1/04,
C07C29/15

(21) Numéro de dépôt : **88402656.8**

(22) Date de dépôt : **21.10.88**

(54) **Procédé de synthèse catalytique hétérogène exothermique, en phase gazeuse sous haute pression et réacteur de mise en oeuvre.**

(30) Priorité : 28.10.87 FR 8714912

(43) Date de publication de la demande :
**03.05.89 Bulletin 89/18**

(45) Mention de la délivrance du brevet :
**12.06.91 Bulletin 91/24**

(84) Etats contractants désignés :
**DE GB IT NL**

(56) Documents cités :
**DE-A- 1 940 980
DE-A- 3 414 717
DE-A- 3 540 457
US-A- 2 363 738**

(72) Inventeur : **Papillon, André**
**32, rue Henri Martin**
**F-94400 Saint Maur Des Fossés (FR)**
Inventeur : **Lesur, Pierre**
**20, avenue Rapp**
**F-75007 Paris (FR)**
Inventeur : **Faury, Christian**
**16, avenue Victor Hugo**
**F-92170 Vanves (FR)**
Inventeur : **Badoual,Christian**
**8, rue Ramollo Garnier**
**F-91300 Massy (FR)**
Inventeur : **Lafleur, Guy**
**2, rue de Bordeau Saint Rémy L'Honoré**
**F-78690 Les Essarts le Roi (FR)**

(74) Mandataire : **Rieux, Michel**
**NORSOLOR Service Propriété Industrielle**
**Tour Aurore 18, Place des Reflets Cedex no. 5**
**F-92080 Paris la Défense 2 (FR)**

(73) Titulaire : **SOCIETE CHIMIQUE DE LA GRANDE PAROISSE**
**Tour Aurore - Place des Reflets**
**F-92080 La Défense 2 Cédex 5 Paris la Défense (FR)**

# Description

La présente invention a pour objet un procédé de synthèse catalytique hétérogène exothermique, en phase gazeuse sous haute pression, ainsi que des réacteurs de mise en oeuvre.

Elle s'applique notamment à la synthèse de l'ammoniac et à celle du méthanol.

Depuis deux décennies, l'augmentation de la capacité de production des installations industrielles et l'abaissement de la pression de ces réactions ont conduit à la conception de réacteurs de grande dimension. Ainsi, des réacteurs ont été construits de manière à ce que la section de passage du gaz à travers le catalyseur soit agrandie, par exemple par une circulation radiale des gaz. La circulation radiale centrifuge, comparée à la circulation centripète, permet d'augmenter le taux de conversion. Mais ceci est rarement réalisé de façon systématique sur chaque lit dans les techniques radiales à lits adiabatiques connues.

En outre, le contrôle de température par l'intermédiaire d'un ou plusieurs échangeurs thermiques placés entre les lits adiabatiques, engendre une augmentation du volume nécessaire du récipient sous haute pression. D'autre part, la circulation du gas de synthèse entre les chicanes de ces échangeurs intermédiaires provoque une perte de charge de ce gaz.

La présente invention pallie ces divers inconvénients, en permettant une circulation radiale centrifuge sur tous les lits catalytiques, en transformant les dits échangeurs intermédiaires en échangeurs-réacteurs radiaux centrifuges, tout en maintenant à un faible niveau la perte de charge des flux gazeux dans ces échangeurs.

Le procédé de synthèse hétérogène exothermique en phase gazeuse sous haute pression, met en oeuvre au moins un lit catalytique cylindrique dans lequel les gaz circulent de façon radiale centrifuge. Selon l'invention le lit catalytique supérieur comprend au moins deux zones catalytiques réactionnelles de type différent, constituées par une zone catalytique réactionnelle centrale adiabatique et une zone catalytique réactionnelle périphérique refroidie, contigüe à la zone adiabatique, les volumes respectifs des dites zones étant fonction du réglage optimal du catalyseur, la zone réactionnelle centrale ayant le volume le plus important.

Ce procédé permet d'obtenir un profil de température dans la masse catalytique tel que le fonctionnement pratiquement optimum d'un point de vue cinétique soit alternativement adiabatique puis refroidi in situ dans chaque lit.

Le lit catalytique supérieur peut comprendre une succession de zones réactionnelles concentriques contigües alternativement adiabatique et refroidie, avec une zone réactionnelle centrale adiabatique et une zone périphérique refroidie, la zone réactionnelle centrale ayant le volume le plus important et l'ensemble des zones refroidies ayant un volume inférieur à celui des zones adiabatiques.

Les volumes des différentes zones catalytiques sont choisis dans des proportions permettant d'atteindre le réglage optimal de la température. Pour un lit catalytique constitué de deux zones, la zone catalytique refroidie représente 5 à 25% de la masse catalytique totale. Pour un lit catalytique constitué par une succession de zones réactionnelles, l'ensemble des zones refroidies représente entre 5 et 25% de la masse catalytique totale et la zone réactionnelle centrale représente entre 40 et 50% du total de la masse catalytique adiabatique.

Quand le procédé est conduit dans plusieurs lits catalytiques superposés, constitués par au moins une zone adiabatique et une zone refroidie, le dernier lit peut éventuellement être adiabatique.

Selon l'invention, le refroidissement des zones réactionnelles est assuré par un ou plusieurs moyens d'échange thermique noyés dans les zones catalytiques refroidies et placés à la périphérie de la zone ou des zones adiabatiques, les dits moyens d'échange thermique étant traversés par un fluide thermique à haut coefficient d'échange, tel que les gaz réactifs sous haute pression.

La circulation des gaz réagissant dans la zone refroidie par le moyen d'échange thermique est aussi radiale, centrifuge. La température des gaz parvenant à la périphérie du lit catalytique est modérée et la perte de charge dans chaque moyen d'échange thermique est faible, bien que le coefficient d'échange soit élevé en raison de la présence des grains de catalyseur conducteurs de la chaleur.

Selon l'invention, le fluide d'échange thermique est partagé en deux flux parallèles avec alimentation descendante, et circulation ascendants divisée assurant l'échange thermique ; puis quand le fluide d'échange thermique est constitué par les gaz réactifs, il participe à la circulation radiale centrifuge à travers la masse catalytique.

Selon une variante, quand le procédé est conduit dans plusieurs lits catalytiques superposés, le flux d'échange thermique étant partagé en deux flux parallèles, l'un des flux formant une alimentation descendante à travers le premier lit catalytique, puis le second lit catalytique, et ensuite dans le second lit catalytique une circulation ascendante divisée assurant l'échange thermique dans le second lit, puis le dit flux est ramené au premier lit catalytique après mélange avec les autres gaz réactifs et participe à la circulation radiale centrifuge à travers la masse catalytique du premier lit, l'autre flux d'échange thermique assurant une alimentation descendante et une circulation ascendante divisée assurant l'échange thermique dans le premier lit.

Quand le fluide d'échange thermique est constitué par les gaz réactifs, il participe après mélange avec les autres gaz réactifs à la circulation radiale centrifuge à travers la masse catalytique du premier lit.

La solution proposée par la présente invention remédie aux différentes difficultés rencontrées dans les techniques actuelles, par une conception simple de réacteur cylindrique, à circulation radiale centrifuge, à lits catalytiques principalement adiabatiques puis refroidis avant la sortie périphérique des gaz, le refroidissement se faisant par un échange-réacteur à faible perte de charge situé à la périphérie du lit catalytique considéré ; l'ensemble du lit catalytique composé d'une partie adiabatique et d'une partie refroidie constituant un module mécanique homogène de construction simple, empilable sur un lit-module du même type placé immédiatement en dessous de lui.

La présente invention s'applique également à un réacteur à un seul lit d'abord adiabatique puis refroidi.

Le procédé peut être mis en oeuvre de la manière suivante non limitative, selon laquelle le gaz de synthèse réactif est préchauffé à la température d'entrée au premier lit catalytique puis amené dans un conduit cylindrique central, en général de section annulaire. La paroi de ce conduit la plus éloignée de l'axe du récipient cylindrique est perforée de façon à répartir de manière uniforme le gaz réactif dans la masse catalytique. Le gaz traverse le lit catalytique cylindrique suivant une trajectoire radiale centrifuge. Les fonds supérieur et inférieur du lit catalytique étant à peu près dans des plans horizontaux, la section de passage du gaz augmente proportionnellement à son éloignement de l'axe du cylindre. La vitesse linéaire décroît donc, alors que la réaction progresse et que la vitesse de réaction, de ce fait, diminue. Le gaz fortement chauffé par cette réaction adiabatique continue d'être dirigé vers la périphérie du cylindre, suivant une trajectoire radiale centrifuge, en traversant ensuite une zone catalytique du même lit traversée par des moyens d'échange thermique. La dite zone catalytique contiguë à la partie adiabatique du lit ne présente pas de discontinuité avec celle-ci. D'autre part, les moyens d'échange thermique sont en général des tubes d'échange verticaux, disposés de la façon la plus efficiente les uns par rapport aux autres. Cette disposition permet à la fois de réaliser un bon échange thermique, de ne pas créer une perte de charge nuisible et de faciliter le remplissage de cette zone en catalyseur. La présence des grains de catalyseur au contact direct des tubes d'échange thermique présente des avantages : la vitesse du gaz circulant entre les grains étant maintenue à des valeurs facilitant le transfert termique ; les grains étant constitués de matière conductrice de la chaleur (grains à base de fer métallique pour la synthèse de l'ammoniac, par exemple) jouent un rôle très important, analogue à celui d'ailettes de transfert thermique au contact des tubes ; enfin, dernier avantage, comme mentionné précédemment, l'intérêt d'un point de vue réactionnel d'une zone du lit refroidie in situ avant la sortie du gaz. Le coefficient d'échange thermique à l'extérieur des tubes d'échange verticaux en l'absence de catalyseur est faible parce que le gaz circule de façon croisée sur toute la hauteur du lit catalytique, donc à une vitesse réduite. Et, au contraire le coefficient d'échange à l'intérieur des tubes est élevé parce que la section de passage du gaz circulant dans les tubes parallèles est relativement faible, et donc la vitesse y est élevée.

Le gaz refroidi et ayant réagi dans la zone catalytique refroidie passe à travers une tôle cylindrique, perforée de façon à maintenir une circulation uniforme dans le lit catalytique, et placée à sa périphérie. Le gaz est ensuite collecté dans une chambre annulaire cylindrique à la périphérie du récipient, pour être ensuite conduit vers un autre lit du même type ou un lit final lequel, rappelons-le, est radial, centrifuge, exclusivement adiabatique en général.

Ainsi, le gaz circulant dans la dite chambre annulaire a été refroidi à la température d'entrée au lit suivant. Dans le cas de la synthèse de l'ammoniac, le gaz est refroidi d'environ 500°C à environ 400°C. A cette dernière température, on sait que l'on peut laisser au contact de la paroi métallique sous haute pression, le gaz riche en hydrogène, sans craindre de corrosion de la dite paroi, à condition de recourir, pour la construction de la dite paroi, à des aciers faiblement alliés qui restent faciles à mettre en oeuvre. A une température de 500°C, il serait nécessaire de recourir à des aciers fortement alliés, travaillant au fluage, la paroi deviendrait très épaisse et difficile à réaliser : il est donc indispensable de refroidir le gaz effluent à 400°C.

Selon une variante, dans le cas de la synthèse de l'ammoniac, il reste possible de continuer à utiliser les aciers traditionnels non alliés ou à 0,5% de molybdène employées pour la construction des parois sous haute pression des réacteurs conventionnels. Dans ce cas, il est nécessaire d'entreposer, entre la chambre annulaire de gaz effluent à 400°C et la paroi sous haute pression, le circuit bien connu de gaz de protection thermique voisin de 200°C. Cette variante peut être utilisée pour moderniser des réacteurs conventionnels dont on voudrait conserver l'enceinte résistant à la haute pression.

Il est donné ci-après, à titre non limitatif, divers modes de réalisation et de mise en oeuvre de l'invention représentés schématiquement sur les figures des dessins annexés.

Exemple 1

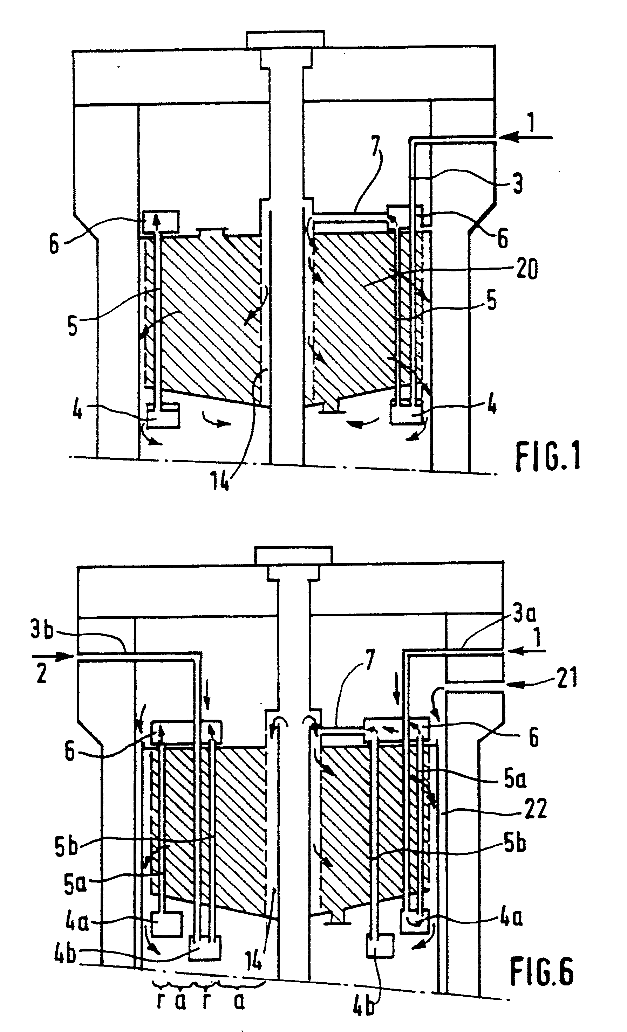

La figure 1 illustre l'invention dans le cas d'un lit catalytique à une seule nappe d'échanges thermiques verticaux internes.

Ce réacteur de synthèse catalytique hétérogène exothermique en phase gazeuse sous haute pression, cylindrique à circulation radiale centrifuge est constitué par une enveloppe métallique résistant à la pression, contenant une chambre annulaire centrale (14) à paroi perforée autour de laquelle sont emboitées les cartouches catalytiques cylindriques, constituées par au moins un module mécanique homogène contenant la masse catalytique (20) dont les parties supérieures et inférieures sont horizontales ou faiblement inclinées et les parois verticales sont perforées.

Le module à sa périphérie est traversé verticalement par la canalisation d'alimentation (3) interne aboutissant dans la chambre collectrice annulaire inférieure d'alimentation (4) du faisceau annulaire (5) vertical interne du lit catalytique supérieur aboutissant dans la chambre collectrice annulaire supérieure (6) reliée par le conduit de liaison (7) à la chambre annulaire cylindrique centrale d'alimentation du dit lit catalytique.

## Exemple 2

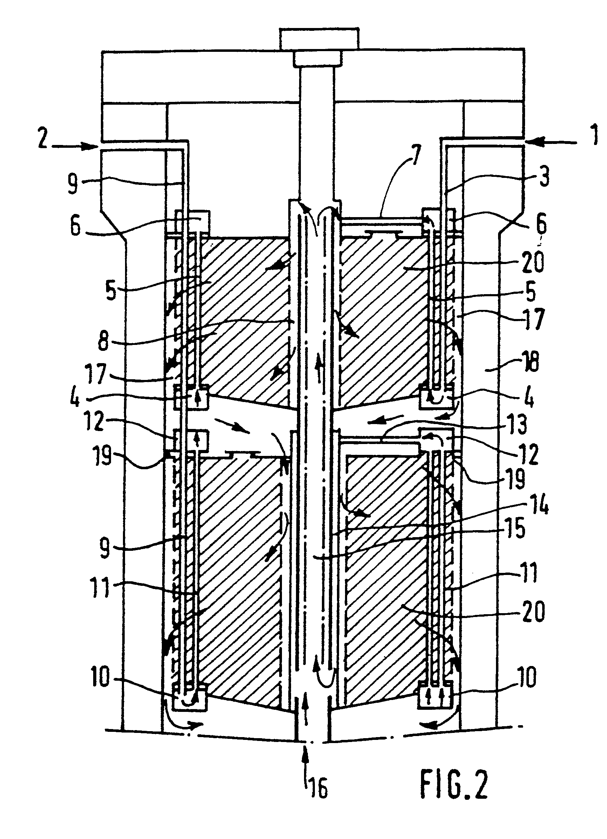

La figure 2 illustre le cas d'un réacteur à au moins deux lits catalytiques pour la synthèse de l'ammoniac.

Ce réacteur contenant au moins deux modules mécaniques contenant la masse catalytique (20) reprend les dispositions du réacteur selon la figure 1, et en outre la canalisation d'alimentation (9) interne traverse verticalement le premier module supérieur à sa périphérie, puis le second module, situé au-dessous du premier module, jusqu'à la chambre collectrice annulaire inférieure (10) d'alimentation du faisceau tubulaire annulaire (11) vertical interne du second lit catalytique qui aboutit dans la chambre collectrice annulaire supérieure (12) reliée par le conduit de liaison (13) à la chambre annulaire centrale (14).

La mise en oeuvre des deux premiers lits catalytiques au moins est celle précédemment décrite, les circuits de liaison et de chauffage sont précisés par rapport à cette description antérieure.

Le gaz de synthèse préchauffé à 200°C dans un échangeur extérieur au réacteur est introduit en parallèle en (1) et en (2) dans le récipient. Le gaz introduit en (1) est conduit à l'aide de la tuyauterie (3) interne à travers la partie refroidie du premier lit catalytique jusqu'à la chambre collectrice annulaire inférieure (4) d'alimentation du faisceau tubulaire annulaire (5) du premier lit. Le gaz réactif se réchauffe en remontant dans les tubes du faisceau tubulaire, récupérant la chaleur de réaction du premier lit catalytique. Le gaz réchauffé à la température d'entrée au premier lit catalytique (environ 400°C) est collecté dans la chambre annulaire supérieure (6), puis ramené par la tuyauterie horizontale (7) dans la chambre annulaire cylindrique centrale (8) d'alimentation du premier lit.

D'autre part, de même, le gaz réactif introduit en (2) dans le récipient est conduit à l'aide de la tuyauterie (9) interne à travers les parties refroidies du premier lit catalytique et du deuxième lit catalytique jusqu'à la chambre annulaire inférieure (10) d'alimentation du faisceau tubulaire annulaire (11) du deuxième lit catalytique. Le gaz se réchauffe en remontant dans les tubes du faisceau tubulaire (11), récupérant la chaleur de réaction du deuxième lit catalytique. Le gaz réchauffé à la température d'entrée au premier lit est collecté dans la chambre annulaire supérieure (12), puis ramené par la tuyauterie horizontale (13) dans une chambre annulaire cylindrique centrale (14) qui conduit le gaz vers la résistance électrique de démarrage (15). Lors du démarrage du réacteur, le gaz à réchauffer passe exclusivement par le circuit (2) et la résistance électrique est en service. En marche normale, la résistance est hors service et le gaz du circuit (2) est conduit, par la chambre annulaire centrale (14), à se mélanger avec le flux (16) du même gaz, réchauffé par l'effluent du dernier lit catalytique dans l'échangeur interne conventionnel réactif produit. Une fraction du flux (16) peut court-circuiter cet échangeur, autorisant un réglage de température avec du gaz à 200°C.

Les débits de gaz des circuits (1) et (2) peuvent être réglés à l'aide de vannes extérieures afin d'atteindre le profil de température optimal du réacteur. Le mélange des flux gazeux (2) et (16) remonte à travers la résistance électrique hors service jusqu'à se mélanger avec le flux (7) réchauffé dans le premier lit catalytique à l'entrée supérieure de la chambre annulaire centrale (8) d'alimentation du premier lit catalytique. Le gaz réactif entre à 400°C dans le premier lit et le traverse conformément à l'invention : le gaz réagissant traverse le lit cylindrique d'abord adiabatique, puis refroidi in situ, en circulant suivant une trajectoire radiale centrifuge.

Le gaz effluent, refroidi à 400°C, quittant le premier lit catalytique, passe dans la chambre annulaire cylindrique périphérique (17), lèchant à 400°C les parois résistant à la haute pression (18), lesquelles sont constituées d'un acier faiblement allié, résistant à la corrosion à chaud par l'hydrogène. Le gaz effluent est ramené vers le lit catalytique suivant, placé en dessous du premier, et suit un circuit du même type que pour le premier lit dans le deuxième lit.

L'exemple comportant seulement deux entrées principales de gaz (1) et (2) réchauffé dans deux circuits parallèles sur les deux lits refroidis, le lit catalytique suivant, non représenté, exclusivement adiabatique : constitue le troisième et dernier lit de ce réacteur. L'effluent du troisième lit catalytique, à 450-500°C, est ensuite, par exemple, refroidi dans le réacteur dans un échangeur conventionnel à contre courant par le flux (16) qui se réchauffe jusqu'à environ 400°C.

Les trois chambres annulaires cylindriques périphériques de type (17) sont séparées entre elles, pour éviter tout court-circuit par des pièces (19) annulaires permettant la libre dilatation thermique tout en assurant l'étanchéité entre les circuits.

La conception mécanique de chaque lit est telle qu'il constitue un module mécanique homogène, indépendant, qui peut être empilé aisément sur celui de même conception placé immédiatement en dessous. Chaque module est pourvu d'une ou plusieurs trappes de visite, ménagées dans la tôle annulaire horizontale supérieure renfermant le catalyseur. Ces trappes permettent un remplissage et la vidange du catalyseur, ainsi que le contrôle aisé des pièces intérieures au module. La partie supérieure du module est équipée d'un dispositif classique évitant tout court-circuit de gaz au-dessus du catalyseur au fur et à mesure que ce dernier se tasse. Ce dispositif n'est pas représenté sur la figure 2.

Cet exemple représente le cas type d'un réacteur neuf, optimisé suivant l'invention.

## Exemple 3

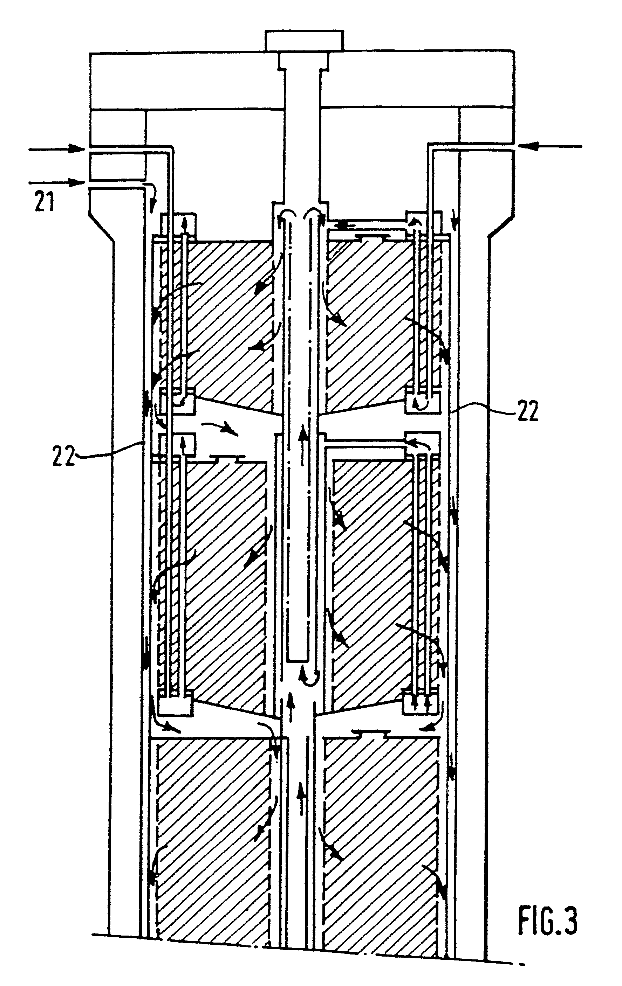

La figure 3 illustre l'invention dans le cas type d'un réacteur conventionnel existant que l'on souhaite moderniser suivant le procédé proposé, le problème étant appliqué au cas de la synthèse d'ammoniac.

Le réacteur comporte le même nombre et le même type de lits que dans l'exemple 2. Toutefois, les parois sous pression ayant été étudiées à la construction pour une température de 200-300°C, il n'est pas possible de mettre à leur contact les gaz effluents des lits, à 400°C. Il est donc nécessaire de conserver le circuit conventionnel de gaz de protection thermique (21) à 200°C, qui circule dans l'espace (22) entre les modules catalytiques et l'enveloppe métallique résistant à la pression. Cette disposition diminue le volume disponible pour le catalyseur et restreint les performances par rapport au même type de réacteur conçu suivant les exemples 1 et 2. Les moyens principaux de l'invention sont cependant mis en oeuvre avec des lits catalytiques d'abord adiabatiques puis refroidis in situ, à circulation radiale centrifuge.

## Exemple 4

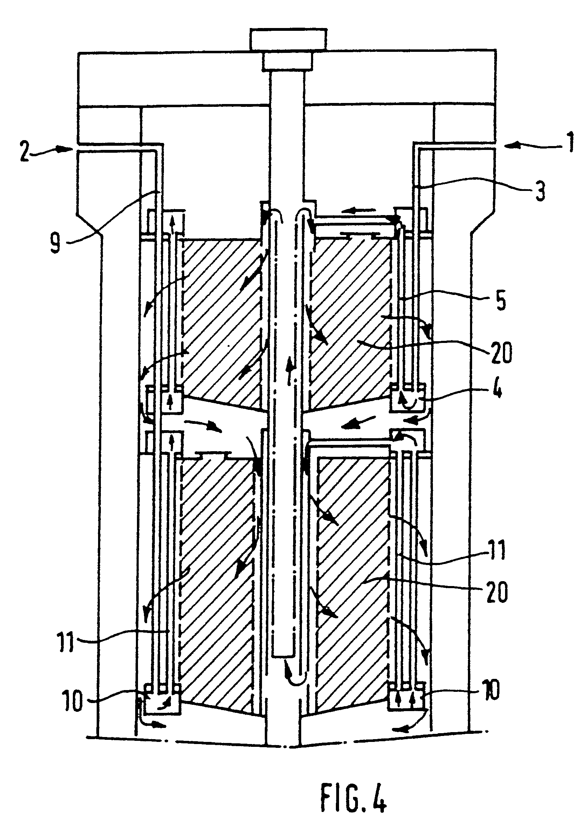

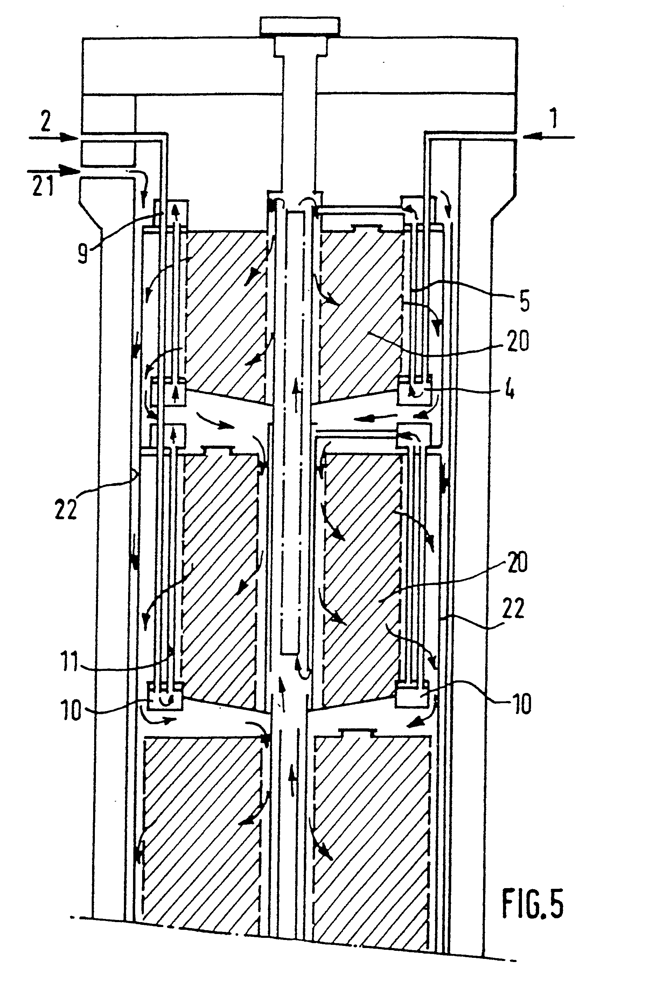

Les figures 4 et 5 représentent des variantes des réacteurs selon les figures 1, 2 et 3.

Selon ces variantes la canalisation d'alimentation (3), la chambre collectrice annulaire inférieur (4), le faisceau tubulaire (5) sont externes à la périphérie du module supérieur contenant la masse catalytique (20).

La canalisation d'alimentation (9), la chambre collectrice annulaire inférieure (10) d'alimentation du faisceau tubulaire annulaire (11) sont externes au premier et second modules contenant la masse catalytique (20).

Selon ces variantes le catalyseur n'apparait pas dans le faisceau d'échange périphérique. Le coefficient d'échange thermique à l'extérieur des tubes est maintenu à une valeur acceptable, soit en utilisant des tubes à ailettes, ou des tubes comportant un relief en matériau conducteur de la chaleur, soit en resserrant étroitement les tubes les uns des autres. Ces variantes sont moins avantageuses que les réalisations des exemples précédents mais présentent un intérêt industriel dans certains cas. Entre les réalisations de base et les variantes, toutes les réalisations intermédiaires peuvent être envisagées.

## Exemple 5

La figure 6 représente une variante très performante pour les grands réacteurs, selon laquelle le faisceau tubulaire périphérique de chaque lit catalytique est partagé en plusieurs nappes concentriques constituant autant de zones de refroidissement du catalyseur. Entre chaque nappe sont ménagées des zones de réaction adiabatique.

La figure 6 constitue une variante directe de la figure 1, représentant un lit catalytique à deux nappes concentriques d'échangeur thermique du type faisceau tubulaire vertical.

Les tubes de l'échangeur sont répartis en plusieurs nappes concentriques noyées verticales, espacées par des zones adiabatiques, la surface d'échange étant comparable à celle définie précédemment. Les nappes d'échange thermique sont disposées de façon à permettre la disposition de zones catalytiques tantôt adiabatiques, tantôt refroidies, les volumes étant dans des proportions permettant d'atteindre le réglage optimal de température du catalyseur. De cette manière, après la grande zone adiabatique centrale (a) nécessaire, la réaction à la périphérie de cette première zone est refroidie (r) puis adiabatique (a) de façon alternée. La zone située à la périphérie demeure une zone refroidie (r). Cette technique permet d'atteindre une plage de température optimale de fonctionnement, pour une teneur donnée en ammoniac, qui s'étale de plus ou moins dix degrés environ de part et d'autre de la courbe de vitesse maximale. Ce contrôle du réglage de température permet de dimensionner un réacteur selon le minimum théorique correspondant à la dite courbe, donc de coût réduit.

Les nappes de tubes d'échange peuvent être avantageusement alimentées en fluide réfrigérant par le gaz réactif d'alimentation du lit catalytique ; il est avantageux que la circulation de ce gaz s'effectue en parallèle dans ces nappes. Les débits de gaz réactif de chaque nappe sont contrôlés chacun par une vanne extérieure au réacteur ; ceci permet de régler le profil de la température de réaction dans le catalyseur.

Le module mécanique homogène contenant la masse catalytique (20) dont les parties supérieures et inférieures sont horizontales ou faiblement inclinées et les parois verticales sont perforées, constitue une variante du réacteur selon la figure 1.

Le module à sa périphérie est doublement traversé par les canalisations d'alimentation (3a) et (3b) internes, aboutissant dans les chambres collectrices annulaires inférieures (4a) et (4b) d'alimentation des faisceaux tubulaires annulaires verticaux (5a) et (5b) internes du lit catalytique aboutissant dans la chambre collectrice annulaire supérieure (6) relié par le conduit de liaison (7) à la chambre annulaire cylindrique centrale d'alimentation (14) du dit lit catalytique.

La conception mécanique de ce module est simplifiée par rapport à celle des exemples précédents. On constate une simplification des liaisons extérieures, du montage et du démontage et des opérations de changement de catalyseur. Le remplissage est effectué en partie supérieure du lit catalytique et la vidange par gravité à travers des orifices situés sur le fond conique du lit catalytique.

Ce type de module mécanique est applicable à un quelconque des autres types de lits catalytiques, notamment en amont d'un dernier lit catalytique exclusivement adiabatique.

Le schéma du réacteur selon la figure 6, constitue un exemple de modernisation d'un réacteur existant suivant cette variante de l'invention, dans lequel on a conservé le circuit conventionnel de gaz de protection thermique (21) circulant dans l'espace (22) entre l'enveloppe métallique résistant à la pression.

**Revendications**

1. Procédé de synthèse catalytique hétérogène exothermique en phase gazeuse sous haute pression, mettant en oeuvre au moins un lit catalytique cylindrique dans lequel les gaz circulent de façon radiale centrifuge, caractérisé en ce que le lit catalytique supérieur comprend au moins deux zones catalytiques réactionnelles de type différent, constituées par une zone catalytique réactionnelle centrale adiabatique et une zone catalytique réactionnelle périphérique refroidie, contigüe à la zone adiabatique, les volumes respectifs des dites zones étant fonction du réglage optimal du catalyseur, la zone réactionnelle centrale ayant le volume le plus important.

2. Procédé de synthèse catalytique hétérogène exothermique en phase gazeuse selon la revendication 1, caractérisé en ce que le lit catalytique supérieur comprend une succession de zones réactionnelles concentriques contigües alternativement adiabatique et refroidie, avec une zone réactionnelle centrale adiabatique et une zone périphérique refroidie, la zone réactionnelle centrale ayant le volume plus important et l'ensemble des zones refroidies ayant un volume inférieur à celui de l'ensemble des zones adiabatiques.

3. Procédé de synthèse catalytique hétérogène exothermique en phase gazeuse selon la revendication 1, caractérisé en ce que pour un lit catalytique constitué de deux zones, la zone catalytique refroidie représente entre 5 et 25% de la masse catalytique totale.

4. Procédé de synthèse catalytique hétérogène exothermique selon la revendication 2, caractérisé en ce que, pour un lit catalytique constitué par une succession de zones réactionnelles, l'ensemble des zones refroidies représente entre 5 et 25% de la masse catalytique totale et la zone réactionnelle centrale représente entre 40 et 50% du total de la masse catalytique adiabatique.

5. Procédé de synthèse catalytique hétérogène exothermique selon une quelconque des revendications 1 à 4, caractérisé en ce que le procédé est conduit dans plusieurs lits catalytiques superposés, constitués chacun par au moins une zone adiabatique et une zone refroidie, le dernier lit étant éventuellement adiabatique.

6. Procédé de synthèse catalytique hétérogène exothermique selon une quelconque des revendications 1 à 5, caractérisé en ce que le refroidissement des zones réactionnelles est assuré par un ou plusieurs moyens d'échange thermique internes noyés dans les zones catalytiques refroidies et placés à la périphérie de la ou des zones adiabatiques, les dits moyens d'échange thermique étant traversés par un fluide thermique à haut coefficient d'échange, tel que les gaz réactifs sous haute pression.

7. Procédé de synthèse catalytique hétérogène exothermique selon la revendication 1, quand le lit catalytique comprend deux zones, caractérisé en ce que le refroidissement de la zone réactionnelle périphérique est assuré par un moyen d'échange thermique externe.

8. Procédé de synthèse catalytique hétérogène exothermique selon une quelconque des revendications 1 à 7, caractérisé en ce que le fluide d'échange thermique est partagé en deux flux parallèles avec alimentation descendante, et circulation ascendante divisée assurant l'échange thermique ; puis quand le fluide d'échange thermique est constitué par les gaz réactifs, il participe après mélange avec les autres gaz réactifs à la circulation radiale centrifuge à travers la masse catalytique.

9. Procédé de synthèse catalytique hétérogène exothermique selon une quelconque des revendications 5 à 7, caractérisé en ce que le flux d'échange thermique est partagé en deux flux parallèles, l'un des flux formant une alimentation descendante à travers le premier lit catalytique, puis le second lit catalytique, et ensuite dans le second lit catalytique une circulation ascendante divisée assurant l'échange thermique dans le second lit, puis le dit flux est ramené au premier lit catalytique après mélange avec les autres gaz réactifs et participe à la circulation radiale centrifuge à travers la masse catalytique du premier lit, l'autre flux d'échange thermique assurant une alimentation descendante et une circulation ascendante divisée assurant l'échange thermique dans le premier lit ; puis quand le fluide d'échange thermique est constitué par les gaz réactifs, il participe après mélange avec les autres gaz réactifs à la circulation radiale centrifuge à travers la masse catalytique du premier lit.

10. Réacteur de synthèse catalytique hétérogène exothermique en phase gazeuse sous haute pression cylindrique à circulation radiale centrifuge, constitué par une enveloppe métallique résistant à la pression, contenant une chambre annulaire centrale (14) à paroi perforée, autour de laquelle sont emboîtées les cartouches catalytiques cylindriques, constituées par au moins un module mécanique homogène contenant la masse catalytique (20) dont les parties supérieures et inférieures sont horizontales ou faiblement inclinées et les parois verticales sont perforées, caractérisé en ce que le module à sa périphérie, est traversé verticalement par la canalisation d'alimentation (3) interne aboutissant dans la chambre collectrice annulaire inférieure (4) d'alimentation du faisceau tubulaire annulaire (5) vertical interne, du lit catalytique supérieur, aboutissant dans la chambre collectrice annulaire supérieure (6) reliée par le conduit de liaison (7) à la chambre annulaire cylindrique centrale d'alimentation (14) du dit lit supérieur.

11. Réacteur de synthèse catalytique hétérogène exothermique en phase gazeuse sous haute pression, selon la revendication 10, contenant au moins deux modules mécaniques contenant la masse catalytique (20), caractérisé en ce qu'en outre la canalisation d'alimentation (9) interne traverse verticalement le premier module supérieur à sa périphérie, puis le second module, situé au-dessous du premier module, jusqu'à la chambre collectrice annulaire inférieure (10) d'alimentation du faisceau tubulaire annulaire (11) vertical interne du second lit catalytique qui aboutit dans la chambre collectrice annulaire supérieure (12) reliée par le conduit de liaison (13) à la chambre annulaire centrale (14).

12. Réacteur de synthèse catalytique, hétérogène exothermique en phase gazeuse sous haute pression, selon la revendication 10, caractérisé en ce que la canalisation d'alimentation (3), la chambre collectrice annulaire inférieure (4), le faisceau tubulaire (5) sont externes à la périphérie du module supérieur contenant la masse catalytique (20).

13. Réacteur de synthèse catalytique hétérogène exothermique en phase gazeuse sous haute pression selon les revendications 11 et 12, caractérisé en ce que la canalisation d'alimentation (9), la chambre collectrice annulaire inférieure (10) d'alimentation du faisceau tubulaire annulaire (11) sont externes au premier et second modules contenant la masse catalytique (20).

14. Réacteur de synthèse catalytique hétérogène exothermique en phase gazeuse sous haute pression selon la revendication 10, caractérisé en ce que le module à sa périphérie est doublement traversé par les canalisations d'alimentation (3a) et (3b) internes, aboutissant dans les chambres collectrices annulaires inférieures (4a) et (4b) d'alimentation des faisceaux tubulaires annulaires verticaux (5a) et (5b), internes du lit catalytique, aboutissant dans la chambre collectrice annulaire supérieure (6) relié par le conduit de liaison (7) à la chambre annulaire cylindrique centrale d'alimentation (14) du dit lit catalytique.

## Ansprüche

1. Heterogenes, exothermes katalytisches Syntheseverfahren in der Gasphase unter hohen Druck, bei dem mindestens ein zylinderförmiges Katalysator-Bett verwendet wird, in dem die Gase radial zentrifugal zirkulieren, **dadurch gekennzeichnet**, daß das obere katalytische Bett mindestens zwei Zonen unterschiedlicher katalytischer Reaktionen aufweist, bestehend aus einer mittleren adiabatisch reagierenden Katalysator-Zone und einer äußeren abgekühlten Katalysator-Zone, die an die adiabatische Zone angrenzt, wobei die jeweiligen Volumina der Zonen von der optimalen Einstellung des Katalysators abhängen und wobei die mittlere Reaktionszone das größere Volumen hat.

2. Verfahren nach Anspruch 1, dadurch gekennzeichnet, daß das obere Katalysator-Bett eine Aufeinanderfolge konzentrischer Reaktionszonen aufweist, die abwechselnd adiabatisch reagierend bzw. gekühlt sind, mit einer mittleren adiabatischen Reaktionszone und einer abgekühlten peripheren Zone, wobei die mittlere Reaktionszone das größte Volumen einnimmt und die abgekühlten Zonen zusammen ein kleineres Volumen haben als die Summe der adiabatischen Zonen.

3. Verfahren nach Anspruch 1, dadurch gekennzeichnet, daß für ein Katalysator-Bett, das aus zwei Zonen besteht, die abgekühlte katalytische Zone zwischen 5 und 25% der gesamten katalytischen Masse ausmacht.

4. Verfahren nach Anspruch 2, dadurch gekennzeichnet, daß für ein Katalysator-Bett, bestehend aus einer Folge von Reaktionszonen, wobei die Gesamtheit der abgekühlten Zonen zwischen 5 und 25% der katalytischen Gesamtmasse ausmacht und die mittlere Reaktionszone zwischen 40 und 50% der adiabatischen katalytischen Gesamtmasse beträgt.

5. Verfahren nach einem der Ansprüche 1 bis 4, dadurch gekennzeichnet, daß das Verfahren in mehreren übereinander angeordneten Katalysator-Betten erfolgt, die jeweils aus mindestens einer adiabatischen Zone und einer abgekühlten Zone bestehen, wobei das letzte Bett gegebenenfalls adiabatisch ist.

6. Verfahren nach einem der Ansprüche 1 bis 5, dadurch gekennzeichnet, daß die Abkühlung der Reaktionszonen durch einen oder mehrere innere Wärmetauscher erfolgt, der bzw. die in die abgekühlten Katalysator-Zonen eingetaucht und im Randbereich des bzw. der adiabatischen Zonen angeordnet ist, wobei die Wärmetauscher von einem Fluid mit hohem Austauschkoeffienten, wie beispielsweise unter hohem Druck reagierende Gase durchströmt wird.

7. Verfahren nach Anspruch 1, wobei das katalytische Bett zwei Zonen aufweist, dadurch gekennzeichnet, daß das Abkühlen der äußeren Reaktionszone durch einen äußeren Wärmetauscher erfolgt.

8. Verfahren nach einem der Ansprüche 1 bis 7, dadurch gekennzeichnet, daß das Wärmetauscherfluid in zwei parallele Ströme mit absteigender Versorgung und aufsteigender unterteilter Zirkulation, die den Wärmetausch gewährleistet, wobei das thermische Austauschfluid aus den reaktiven Gasen besteht und nach Vermischung mit den anderen reaktiven Gasen an der zentrifugalen radialen Zirkulation durch die katalytische Masse beteiligt ist.

9. Verfahren nach einem der Ansprüche 5 bis 7, dadurch gekennzeichnet, daß der thermische Austauschfluß in zwei parallele Flüsse unterteilt ist, bei einem der Flüsse die absteigende Versorgung durch das erste, dann das zweite Katalysator-Bett und schließlich im zweiten Katalysator-Bett eine aufsteigende unterteilte Zirkulation bildet, die den Wärmeaustausch in dem zweiten Bett gewährleistet, wonach der Fluß in das erste Katalysator-Bett zurückgeführt wird nach Vermischen mit den anderen reaktiven Gasen und wo der Fluß an der radialen zentrifugalen Zirkulation durch die Katalysemasse des ersten Betts teilnimmt und der andere thermische Austauschfluß eine absteigende Versorgung und eine aufsteigende unterteilte Zirkulation gewährleistet, der den Wärmeaustausch in dem ersten Bett sicherstellt, wonach dann das thermische Austauschfluid aus reaktiven Gasen besteht, dieses nach Vermischen mit den anderen reaktiven Gasen an der radialen zentrifugalen Zirkulation durch die katalytische Masse des ersten Betts teilnimmt.

10. Reaktor für die katalytische heterogene exotherme Synthese in der Gasphase unter hohem Druck in Zylinderform und mit radialer zentrifugaler Zirkulation, mit einem Metalldruckmantel, der eine zentrale ringförmige Kammer (14) mit perforierter Wandung aufweist, um die herum zylinderförmige Katalysatoreinsätze angeordnet sind, bestehend aus mindestens einem homogenen mechanischen Modul, das die Katalysatormasse (20) enthält, dessen obere und untere Bereiche horizontal oder leicht geneigt sind und dessen vertikale Wandungen perforiert sind, **dadurch gekennzeichnet**, daß das Modul an seiner Peripherie vertikal von einer inneren Versorgungsleitung (3) durchquert wird, die in der unteren ringförmigen Sammelkammer (4) des Bündels ringförmiger vertikaler innerer Rohre (5) des oberen Katalysator-Bettes mündet und in der oberen ringförmigen Sammelkammer (6) endet, die über die Verbindungsleitung (7) mit der ringförmigen zylindrischen mittleren Versorgungskammer (14) des oberen Bettes verbunden ist.

11. Reaktor nach Anspruch 10, bestehend aus mindestens zwei mechanischen Modulen, die die Katalysatormasse (12) aufweist, dadurch gekennzeichnet, daß ferner die inneren Versorgungsleitungen (9) vertikal das erste obere Modul in dessen Randbereich und anschließend das zweite Modul durchquert, das unterhalb des ersten Moduls angeordnet ist bis zur unteren ringförmigen Versorgungssammelkammer (10) des internen vertikalen ringförmigen Rohrbündels (11) des zweiten Katalysatorbettes, das in der oberen ringförmigen Sammelkammer (12) mündet, das über die Verbindungsleitungen (13) mit der mittleren ringförmigen Kammer (14) verbunden ist.

12. Reaktor nach Anspruch 10, dadurch gekennzeichnet, daß die Versorgungsleitung (3), die untere ringförmige Sammelkammer (4) und das Rohrbündel (5) außen an der Peripherie des oberen Moduls, das die Katalysatormasse (12) beinhaltet, angeordnet sind.

13. Reaktor nach den Ansprüchen 11 und 12, dadurch gekennzeichnet, daß die Versorgungsleitung (9) und die untere ringförmige Versorgungskammer des ringförmigen Rohrbündels (11) außerhalb des ersten und zweiten Moduls angeordnet sind, die die Katalysatormasse (20) beinhalten.

14. Reaktor nach Anspruch 10, dadurch gekennzeichnet, daß das Modul in seinem Randbereich zweifach durch die inneren Versorgungsleitungen (3a, 3b) durchquert werden, die in den mittleren ringförmigen Sammelkammern (4a und 4b) zur Versorgung der inneren vertikalen ringförmigen Rohrbündel (5a und 5b) des Katalysatorbettes münden, die wiederum in den der oberen ringförmigen Sammelkammer (6) münden, die mit der Verbindungsleitung (7) mit der mittleren zylinderförmigen ringförmigen Versorgungskammer (14) des Katalysatorbettes verbunden ist.

## Claims

1. Process for exothermic heterogeneous catalytic synthesis in the gaseous phase under high pressure, employing at least one cylindrical catalytic bed in which the gases flow in a centrifugal radial manner, characterized in that the upper catalytic bed comprises at least two catalytic reaction zones of different types, consisting of an adiabatic central catalytic reaction zone and a cooled peripheral catalytic reaction zone, adjacent to the adiabatic zone, the respective volumes of the said zones being in accordance with the optimal adjustment of the catalyst, the central reaction zone having the larger volume.

2. Process for exothermic heterogeneous catalytic synthesis in the gaseous phase according to Claim 1, characterized in that the upper catalytic bed comprises a succession of adjacent concentric reaction zones, alternately adiabatic and cooled, with an adiabatic central reaction zone and a cooled peripheral zone, the central reaction zone having the larger volume and the collective cooled zones having a volume smaller than that of the collective adiabatic zones.

3. Process for exothermic heterogeneous catalytic synthesis in the gaseous phase according to Claim 1, characterized in that, for a catalytic bed consisting of two zones, the cooled catalytic zone represents between 5 and 25% of the total catalytic mass.

4. Process for exothermic heterogeneous catalytic synthesis according to Claim 2, characterized in that, for a catalytic bed consisting of a succession of reaction zones, the collective cooled zones represent between 5 and 25% of the total catalytic mass and the central reaction zone represents between 40 and 50% of the total of the adiabatic catalytic mass.

5. Process for exothermic heterogeneous catalytic synthesis according to any one of Claims 1 to 4, characterized in that the process is performed in several superposed catalytic beds, each consisting of at least one adiabatic zone and one cooled zone, the last bed optionally being adiabatic.

6. Process for exothermic heterogeneous catalytic synthesis according to any one of Claims 1 to 5, characterized in that the cooling of the reaction zones is effected by one or more internal means of heat exchange embedded in the cooled catalytic zones and placed at the periphery of the adiabatic zone or zones, a heat-transfer fluid with a high heat-transfer coefficient, such as the reactive gases under high pressure, passing through the said means of heat exchange.

7. Process for exothermic heterogeneous catalytic synthesis according to Claim 1, when the catalytic bed comprises two zones, characterized in that the cooling of the peripheral reaction zone is effected by an external means of heat exchange.

8. Process for exothermic heterogeneous catalytic synthesis according to any one of Claims 1 to 7, characterized in that the heat-transfer fluid is distributed in two parallel flows, with downward feed, and divided upward flow effecting the heat exchange ; then, when the heat-transfer fluid consists of the reactive gases, it participates, after mixing with the other reactive gases, in the centrifugal radial flow through the catalytic mass.

9. Process for exothermic heterogeneous catalytic synthesis according to any one of Claims 5 to 7, characterized in that the heat-exchange flow is distributed in two parallel flows, one of the flows forming a downward feed through the first catalytic bed and then the second catalytic bed, and then, in the second catalytic bed, a divided upward flow effecting the heat exchange in the second bed, and the said flow is then brought back to the first catalytic bed after mixing with the other reactive gases and participates in the centrifugal radial flow through the catalytic mass of the first bed, the other heat-exchange flow providing for a downward feed and a divided upward flow effecting the heat exchange in the first bed ; then, when the heat-transfer fluid consists of the reactive gases, it participates, after mixing with the other reactive gases, in the centrifugal radial flow through the catalytic mass of the first bed.

10. Cylindrical reactor for exothermic heterogeneous catalytic synthesis in the gaseous phase under high pressure with centrifugal radial flow, consisting of a pressure-resistant metal shell containing a central annular chamber (14) with a perforated wall, around which are fitted the cylindrical catalytic cartridges consisting of at least one homogeneous mechanical module containing the catalytic mass (20), the tops and bottoms of which are horizontal or slightly sloping and the vertical walls of which are perforated, characterized in that the module at its periphery is passed through vertically by the internal feed pipe (3) leading to the lower annular collecting chamber (4) feeding the internal vertical annular tube bundle (5) of the upper catalytic bed, leading to the upper annular collecting chamber (6) connected via the linking duct (7) to the central cylindrical annular feed chamber (14) of the said upper bed.

11. Reactor for exothermic heterogeneous catalytic synthesis in the gaseous phase under high pressure, according to Claim 10, containing at least two mechanical modules containing the catalytic mass (20), characterized in that, in addition, the internal feed pipe (9) passes vertically through the first, upper module at its periphery, and then the second module situated below the first module, up to the lower annular collecting chamber (10) feeding the internal vertical annular tube bundle (11) of the second catalytic bed, which leads to the upper annular collecting chamber (12) connected via the linking duct (13) to the central annular chamber (14).

12. Reactor for exothermic heterogeneous catalytic synthesis in the gaseous phase under high pressure, according to Claim 10, characterized in that the feed pipe (3), the lower annular collecting chamber (4) and the tube bundle (5) are outside the periphery of the upper module containing the catalytic mass (20).

13. Reactor for exothermic heterogeneous catalytic synthesis in the gaseous phase under high pressure, according to Claims 11 and 12, characterized in that the feed pipe (9) and the lower annular collecting chamber (10) feeding the annular tube bundle (11) are outside the first and second modules containing the catalytic mass (20).

14. Reactor for exothermic heterogeneous catalytic synthesis in the gaseous phase under high pressure, according to Claim 10, characterized in that the module at its periphery is passed through doubly by the internal feed pipes (3a) and (3b) leading to the lower annular collecting chambers (4a) and (4b) feeding the vertical annular tube bundles (5a) and (5b), inside the catalytic bed, leading to the upper annular collecting chamber (6) connected via the linking duct (7) to the central cylindrical annular feed chamber (14) of the said catalytic bed.

FIG.1

FIG.6

FIG.2

21

22

22

FIG.3

FIG.4

FIG.5